# EUROPÄISCHE PATENTANMELDUNG

(11) **EP 0 913 598 A1**
(43) Veröffentlichungstag der Anmeldung: **06.05.1999**
(21) Anmeldenummer: 98117548.2
(22) Anmeldetag: 16.09.1998
(51) Int. Cl.: F16D 33/18, F16H 41/24, B60K 1/00, F16F 15/12

(54) **Drehmomentwandleranbindung mit Schwingungsdämpfer**

(30) Priorität: 30.10.1997 DE 19747963
(71) Anmelder: Bayerische Motoren Werke Aktiengesellschaft, 80788 München (DE)
(72) Erfinder: Stephan, Anton, 85598 Baldham (DE); Werner, Jürgen, 85748 Garching (DE); Pour, Rahim, Dr., 85748 Garching (DE)

(57) **Zusammenfassung**

Es wird eine Antriebsverbindung zur Drehmomentübertragung im Antriebsstrang eines Kraftfahrzeugs für lösbares Verbinden einer Kurbelwelle (1) mit einem gleichachsig angeordneten hydrodynamischen Drehmomentwandler (5), unter Zwischenschaltung eines außerhalb des Drehmomentwandlers (5) liegenden Torsionsschwingungsdämpfers (14), vorgeschlagen, bei der die Verbindung zwischen Drehmomentwandler (5) und Torsionsschwingungsdämpfer (14) eine mit Längsverzahnungen versehene Wellen-Nabenverbindung (7,6) ist.

## Beschreibung

Die Erfindung betrifft eine Drehmomentwandleranbindung an eine Kurbelwelle im Antriebsstrang eines Kraftfahrzeugs, unter Zwischenschaltung eines Torsionsschwingungsdämpfers, nach dem Oberbegriff des Hauptanspruchs.

### [Stand der Technik]

Es ist bereits bekannt, einen Drehmomentwandler unter Zwischenschaltung eines Torsionsschwingungsdämpfers mit einer Kurbelwelle zu verbinden. Die DE 36 06 707 A1 beschreibt eine solche Anordnung, deren Montage nur auf schwierige und aufwendige Weise möglich ist.

### [Aufgabe der Erfindung]

Deshalb ist es Aufgabe der Erfindung, eine lösbare Verbindung zwischen einem Drehmomentwandler und einer Kurbelwelle unter Zwischenschaltung eines Torsionsschwingungsdämpfers bereitzustellen, die einfach montiert werden kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist eine Antriebsverbindung zur Drehmomentübertragung im Antriebsstrang eines Kraftfahrzeugs für lösbares Verbinden einer Kurbelwelle mit einem gleichachsig angeordneten hydrodynamischen Drehmomentwandler unter Zwischenschaltung eines außerhalb des Drehmomentwandlers liegenden Torsionsschwingungsdämpfers vorgesehen, wobei die Verbindung zwischen Drehmomentwandler und Torsionsschwingungsdämpfer eine mit Längsverzahnungen versehene Wellen-Nabenverbindung ist.

Das Verbinden von Drehmomentwandler und Torsionsschwingungsdämpfer über eine mit Längsverzahnungen versehene Wellen-Nabenverbindung hat den Vorteil, daß die Drehmomentwandleranbindung einfach montiert werden kann. Dazu brauchen Torsionsschwingungsdämpfer und Drehmomentwandler nur in axialer Richtung so zusammengeschoben werden, daß die Längsverzahnungen von Welle und Nabe ineinander ragen.

Bei bevorzugten Ausführungen der Erfindung ist die längsverzahnte Nabe bzw. Welle am Drehmomentwandler und das damit korrespondierende Element der Wellen-Nabenverbindung am Torsionsschwingungsdämpfer angebracht.

Das hat den Vorteil, daß die drehmomentübertragende Verbindung zwischen Torsionsschwingungsdämpfer und Drehmomentwandler aus sehr wenigen Teilen besteht, die mit geringem Montageaufwand zusammengebaut werden können.

Desweiteren wird durch die Erfindung ein Ausschlagen der Längsverzahnung vermieden, da der Torsionsschwingungsdämpfer den Drehmomentwandler bezüglich der Torsionsschwingungen von der Kurbelwelle abkoppelt.

Außerdem werden durch die Längsverzahnung Axial- und Radialtoleranzen ausgeglichen.

Bei einer vorteilhaften Ausführung der Erfindung ist am Torsionsschwingungsdämpfer ein Rotor einer elektrischen Maschine ausgebildet. So kann dieser bei seiner Drehung als elektrische Maschine arbeiten, zusammen mit einem am Zylinderkurbelgehäuse angebrachten Stator. Dabei kann ein Betrieb der elektrischen Maschine sowohl als Motor, als auch als Generator vorgesehen werden. Beim Motorbetrieb ist insbesondere auch eine Betriebsart als Startermotor für die Brennkraftmaschine möglich.

Eine weitere vorteilhafte Ausführung der Erfindung sieht vor, daß Drehmomentwandler und Kurbelwelle eine mindestens in radialer Richtung wirkende, formschlüssige Zentrierverbindung besitzen. Diese Zentrierverbindung zwischen Drehmomentwandler und Kurbelwelle ist so gestaltet, daß sie als erstes zustande kommt, wenn der Drehmomentwandler bei der Montage in Richtung Kurbelwelle verschoben wird. Erst nach dem Aufbau der Zentrierverbindung werden, durch weiteres Verschieben des Drehmomentwandlers in Richtung Kurbelwelle, die Längsverzahnungen von Welle und Nabe ineinander geschoben, zur Herstellung der Verbindung zwischen dem Drehmomentwandler und dem Torsionsschwingungsdämpfer. Das hat den Vorteil, daß eine noch einfachere und sicherere Montage gewährleistet ist.

Ein bevorzugtes Ausführungsbeispiel der Erfindung beschreibt die nachfolgende Beschreibung mit der zugehörigen Zeichnung.

### [Beispiele]

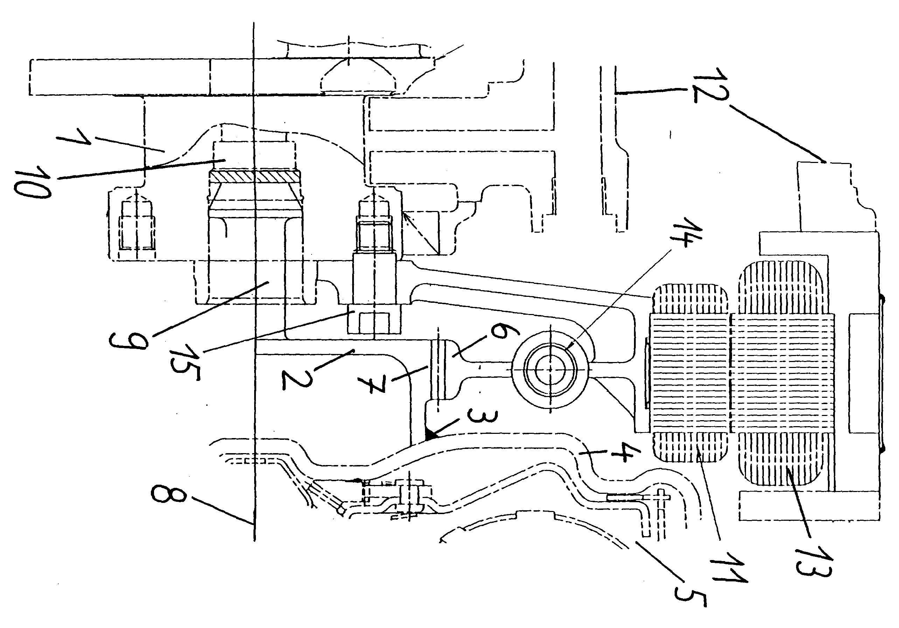

Die einzige Figur zeigt die Anbindung einer Kurbelwelle an einen hydrodynamischen Drehmomentwandler, unter Zwischenschaltung eines Torsionsschwingungsdämpfers, gemäß der Erfindung, in einem Teilschnitt.

An einem Endabschnitt einer Kurbelwelle 1, ist durch Schrauben 15 ein Torsionsschwingungsdämpfer 14 angebracht. Dieser ist zu seiner Verbindung mit einem hydrodynamischen Drehmomentwandler 5 an der Anbindungsstelle als längsverzahnte Nabe 6 ausgebildet, die auf einen als längsverzahnte Welle 7 ausgebildeten Antriebsflansch 2 des hydrodynamischen Drehmomentwandlers 5 aufgeschoben ist. Der Antriebsflansch 2 ist durch eine Schweißnaht 3 fest mit dem Gehäuse 4 des Drehmomentwandlers 5 verbunden.

Außerdem ist am Antriebsflansch 2 , rotationssymmetrisch zur Drehachse 8, ein Zentrierbolzen 9 angebracht, der in eine Zentrierbohrung 10 der Kurbelwelle 1 hineinragt und den Drehmomentwandler 5 in der Kurbelwelle 1 zentriert. Die in radialer Richtung wirkende formschlüssige Zentrierverbindung zwischen Drehmomentwandler 5 und Kurbelwelle 1 kommt zuerst zustande, wenn der Drehmomentwandler 5 bei der Montage in Richtung Kurbelwelle 1 verschoben wird. Erst nach dem Aufbau der Zentrierverbindung werden, durch weiteres Verschieben des Drehmomentwandlers 5 in Richtung Kurbelwelle 1, die Längsverzahnungen der Welle 7 auf die der Nabe 6 aufgeschoben, zur Herstellung der Verbindung zwischen dem Drehmomentwandler 5 und dem Torsionsschwingungsdämpfer 14.

Zusätzlich sind am Torsionsschwingungsdämpfer 14 noch Rotorwicklungen 11 angebracht, damit dieser bei seiner Drehung als elektrische Maschine arbeitet, zusammen mit an einem Zylinderkurbelgehäuse 12 angebrachten Statorwicklungen 13. Dabei ist ein Betrieb der elektrischen Maschine sowohl als Motor, als auch als Generator möglich. Beim Motorbetrieb ist insbesondere auch eine Betriebsart als Startermotor für die Brennkraftmaschine vorgesehen.

## Patentansprüche

1. Antriebsverbindung zur Drehmomentübertragung im Antriebsstrang eines Kraftfahrzeugs, für lösbares Verbinden einer Kurbelwelle (1) mit einem gleichachsig angeordneten hydrodynamischen Drehmomentwandler (5), unter Zwischenschaltung eines außerhalb des Drehmomentwandlers (5) liegenden Torsionsschwingungsdämpfers (14), dadurch gekennzeichnet, daß die Verbindung zwischen Drehmomentwandler (5) und Torsionsschwingungsdämpfer (14) eine mit Längsverzahnungen versehene Wellen-Nabenverbindung ist.

2. Antriebsverbindung nach Anspruch 1, dadurch gekennzeichnet, daß eine längsverzahnte Nabe (6) bzw. Welle (7) der Wellen-Nabenverbindung am Drehmomentwandlergehäuse (4) angebracht ist.

3. Antriebsverbindung nach Anspruch 1 oder 2, dadurch gekennzeichnet, daß eine längsverzahnte Welle (7) bzw. Nabe (6) der Wellen-Nabenverbindung an dem Torsionsschwingungsdämpfer (14) angebracht ist.

4. Antriebsverbindung nach einem der Ansprüche 1 bis 3, dadurch gekennzeichnet, daß an dem Torsionsschwingungsdämpfer (14) ein Rotor (11) einer elektrischen Maschine ausgebildet ist.

5. Antriebsverbindung nach Anspruch 4, dadurch gekennzeichnet, daß die elektrische Maschine sowohl als Motor, als auch als Generator betrieben werden kann.

6. Antriebsverbindung nach einem der Ansprüche 1 bis 5, dadurch gekennzeichnet, daß zwischen dem Drehmomentwandler (5) und der Kurbelwelle (1) eine mindestens in radialer Richtung wirkende, formschlüssige Zentrierverbindung besteht.
